# FASCICULE DE BREVET EUROPEEN

(11) **EP 3 375 690 B1**
(45) Date de publication et mention de la délivrance du brevet: **07.01.2026**
(21) Numéro de dépôt: 18161317.5
(22) Date de dépôt: 12.03.2018
(51) Int. Cl.: B61L 15/00, B61L 23/04

(54) **PROCÉDÉ D'AIDE À LA CONDUITE D'UN VÉHICULE FERROVIAIRE ET VÉHICULE FERROVIAIRE ÉQUIPÉ D'UN SYSTÈME DE SUPERVISION POUR LA MISE EN OEUVRE DE CE PROCÉDÉ**
FAHRERASSISTENZSYSTEM FÜR SCHIENENFAHRZEUG, UND MIT EINEM ÜBERWACHUNGSSYSTEM FÜR DIE UMSETZUNG DIESES VERFAHRENS AUSGERÜSTETES SCHIENENFAHRZEUG
DRIVING ASSISTANCE METHOD FOR A RAILWAY VEHICLE AND RAILWAY VEHICLE INCLUDING A SUPERVISION SYSTEM FOR IMPLEMENTING THIS DRIVER ASSISTANCE METHOD

(30) Priorité: 13.03.2017 FR 1752044
(43) Date de publication de la demande: 19.09.2018
(73) Titulaire: ALSTOM Holdings, 93400 Saint-Ouen-sur-Seine (FR); Fondation de Coopération Scientifique RAILENIUM, 59300 Famars (FR)
(72) Inventeur: MIGLIANICO, Denis, 75009 Paris (FR); VANDERHAEGEN, Frédéric, 59313 Valenciennes Cedex 9 (FR); POLET, Philippe, 59313 Valenciennes Cedex 9 (FR); MOUCHEL, Mathieu, 59141 Iwuy (FR); DAHYOT, Rudy, 59540 Caudry (FR); BERDJAG, Denis, 59313 Valenciennes Cedex 9 (FR)
(74) Mandataire: Plasseraud IP

(56) Documents cités:
- EP-A1- 1 730 710
- WO-A1-2009/126071
- US-A1- 2014 276 090
- US-B1- 7 027 621
- US-B1- 9 135 803

## Description

La présente invention concerne un procédé d'aide à la conduite d'un véhicule ferroviaire. L'invention concerne également un véhicule ferroviaire comportant un système de supervision pour la mise en œuvre d'un tel procédé.

De façon connue, les véhicules ferroviaires modernes sont équipés de dispositifs d'aide à la conduite qui génèrent des messages d'information à destination du conducteur du véhicule. Ces messages portent par exemple sur le fonctionnement du véhicule ferroviaire ou bien sur l'exploitation du service assuré par ce véhicule, par exemple dans le cadre d'une liaison de transport de voyageurs.

Ces dispositifs connus ont pour inconvénient que les messages envoyés ne sont pas toujours correctement reçus par le conducteur, par exemple parce que l'attention du conducteur est accaparée par une autre tâche, ou encore parce que la vigilance du conducteur est amoindrie. De plus, un flot de messages trop important peut déconcentrer le conducteur alors qu'il est en train de réaliser une tâche importante.

Le document US9135803B1 décrit une méthode qui permet de déterminer si le conducteur d'un véhicule est en état d'ébriété et qui déclenche une réponse atténuante lorsqu'un état d'ébriété est détecté. Le conducteur du véhicule, l'environnement entourant le véhicule ou les forces agissant sur le véhicule peuvent être surveillés à l'aide de divers capteurs, notamment des capteurs optiques, des accéléromètres ou des capteurs biométriques (par exemple, conductivité cutanée, fréquence cardiaque ou modulation vocale). Lorsque le conducteur du véhicule est jugé inapte à la conduite, une alerte ou une autre réponse d'atténuation est mise en œuvre, sur la base des données des capteurs. Dans certains modes de réalisation, des mesures d'atténuation peuvent être prises pour éviter l'inaptitude du conducteur du véhicule.

C'est à ces inconvénients qu'entend plus particulièrement remédier l'invention en proposant un procédé d'aide à la conduite d'un véhicule ferroviaire, dans lequel des messages d'information adressés au conducteur sont modulés en fonction de la vigilance du conducteur de façon plus efficace.

A cet effet, l'invention concerne un procédé d'aide à la conduite d'un véhicule ferroviaire comportant un pupitre de pilotage pour un conducteur du véhicule ferroviaire, ce procédé comportant les étapes de la revendication 1.

Grâce à l'invention, l'état de vigilance du conducteur est pris en compte de façon plus précise. En construisant un indice de vigilance tenant compte à la fois de l'état physiologique du conducteur, quantifié par son niveau de somnolence, et aussi de son état cognitif, quantifié par son niveau d'attention vis-à-vis des sollicitations reçues dans l'exercice de la conduite du véhicule, la vigilance du conducteur est estimée de façon plus fiable et plus précise. La modulation des informations d'aide à la conduite adressées au conducteur est ainsi réalisée de façon plus efficace.

Selon des aspects avantageux mais non obligatoires de l'invention, un tel procédé peut incorporer une ou plusieurs des caractéristiques suivantes
- Lors de l'étape c), la modulation comporte la modification, par le dispositif d'aide à la conduite, de niveaux de priorité et/ou de caractéristiques d'affichage des messages appartenant au flux de messages, en fonction de l'indice de vigilance calculé et selon un ensemble de règles prédéfinies.
- Le procédé comporte en outre la mesure de caractéristiques représentatives d'un environnement du véhicule ferroviaire, par un premier ensemble d'analyse du dispositif de surveillance, et, lors de l'étape b), les indicateurs représentatifs des niveaux de somnolence et d'attention du conducteur sont construits en fonction des caractéristiques représentatives de l'environnement du véhicule ferroviaire mesurées.
- Lors de l'étape b), les caractéristiques observables mesurées comportent des caractéristiques oculométriques relatives aux yeux du conducteur mesurées au moyen d'un troisième ensemble de mesure du dispositif de surveillance pourvu d'un oculomètre.
- Lors de l'étape b), les caractéristiques observables mesurées comportent des caractéristiques faciales du conducteur mesurées au moyen d'un quatrième ensemble de mesure du dispositif de surveillance pourvu d'un capteur d'image.
- Lors de l'étape b), le calcul de l'indice de vigilance comporte la combinaison des indicateurs représentatifs des niveaux de somnolence et d'attention par fusion de données.
- L'étape b) comporte, préalablement à la construction des indicateurs représentatifs des niveaux de somnolence et d'attention, une normalisation des caractéristiques observables mesurées, de préférence en fonction des caractéristiques représentatives du contexte de fonctionnement du véhicule ferroviaire et de l'environnement du véhicule ferroviaire.
- Le procédé comporte en outre une étape d'émission d'une alerte de sécurité à l'attention du conducteur au moyen d'un module de génération d'alerte lorsque l'indice de vigilance calculé indique un défaut de vigilance du conducteur.

Selon un autre aspect, l'invention concerne un véhicule ferroviaire comportant les caractéristiques de la revendication 9.

L'invention sera mieux comprise et d'autres avantages de celle-ci apparaîtront plus clairement à la lumière de la description qui va suivre, d'un mode de réalisation d'un procédé d'aide à la conduite d'un véhicule ferroviaire, donnée uniquement à titre d'exemple et faite en référence aux dessins annexés dans lesquels :
- la figure 1 représente, de façon schématique, un véhicule ferroviaire équipé d'un système de supervision comprenant un dispositif d'aide à la conduite et un dispositif de surveillance de l'état de vigilance d'un conducteur conforme à l'invention ;
- la figure 2 représente un schéma synoptique du fonctionnement du système de supervision du véhicule ferroviaire de lafigure 1 ;
- la figure 3 est un ordinogramme d'un procédé d'aide à la conduite conforme à l'invention et mis en œuvre par le dispositif de lafigure 1.

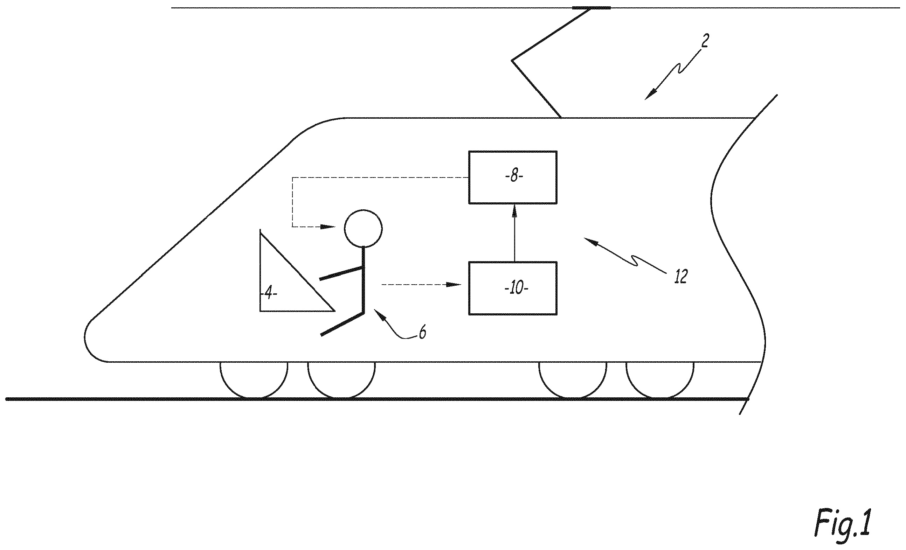

La figure 1 représente un véhicule ferroviaire 2, par exemple un train ou un véhicule de transport urbain tel qu'un tramway. Le véhicule 2 comporte un pupitre de pilotage 4, destiné à être utilisé par un conducteur 6 humain pour piloter le véhicule 2. Le pupitre 4 comporte à cet effet des commandes de pilotage actionnables par le conducteur 6.

Par exemple, le pupitre 4 comporte un manipulateur de traction, non illustré, actionnable par le conducteur 6 pour commander une chaîne de traction et de freinage du véhicule 2. Le pupitre 4 comporte également un ordinateur de bord, pourvu d'une interface homme-machine comprenant ici au moins un écran vidéo, un clavier et un haut-parleur. Parmi les commandes de pilotage figurent en outre une commande d'un avertisseur sonore du véhicule 2, une commande d'ouverture de portes et un dispositif de vigilance active, ou homme-mort, connu sous l'acronyme VACMA.

Le véhicule 2 comporte également un dispositif 8 d'aide à la conduite et un dispositif 10 de surveillance de l'état de vigilance du conducteur 6.

Le dispositif 8 est destiné à fournir au conducteur 6 des informations, ou consignes, relatives à l'exploitation du véhicule 2. Ces informations d'exploitation sont par exemples transmises au conducteur 6 sous la forme de messages affichés sur une interface homme-machine accessible au conducteur 6, par exemple au moyen du pupitre 4. Ainsi, le dispositif 8 génère un flux de plusieurs messages, par exemple séquentiellement au cours du temps.

Par exemple, des messages contenant du texte et/ou des pictogrammes et/ou des symboles graphiques sont affichés sur l'interface homme-machine du pupitre 4. L'écran vidéo peut être intégré au sein du pupitre 4 ou être placé dans un champ de vision du conducteur 6, sous la forme d'un dispositif d'affichage tête haute, dit « head-up display » en langue anglaise. Des messages peuvent également être émis par un haut-parleur du pupitre 4 sous forme d'un signal sonore audible.

Ces messages convoient par exemple une information sur un état interne d'équipements techniques du véhicule 2, de l'état d'un système de signalisation ferroviaire du réseau ferré dans lequel le véhicule 2 évolue, ou encore sur l'exploitation d'une mission assurée par ce véhicule 2. Par exemple, dans le cadre d'une liaison de transport de voyageurs, ces messages peuvent indiquer un retard par rapport à un horaire prédéfini ou une modification de l'itinéraire que doit suivre le véhicule 2. Ces messages peuvent ainsi correspondre à des consignes que doit respecter le conducteur 6 pour assurer une exploitation normale du véhicule 2.

Ces messages sont, par exemple, générés en fonction d'informations émises par des équipements du véhicule ferroviaire 2 ou depuis un serveur informatique d'un central de régulation ou d'un poste d'aiguillage ou d'un atelier de maintenance du véhicule 2 et qui sont reçues par le véhicule 2 au moyen d'une liaison de télécommunications.

Le dispositif 10 est destiné à estimer un état de vigilance du conducteur 6 au moyen d'appareils de mesure dédiés, tels que des capteurs, et à calculer un indice de vigilance I_{V} en fonction des mesures réalisées.

L'indice de vigilance I_{V} quantifie l'état de vigilance du conducteur 6. Par exemple, l'indice de vigilance I_{V} est un nombre indiquant un niveau de vigilance par rapport à une échelle prédéfinie. A titre d'exemple illustratif, l'indice de vigilance I_{V} est ici exprimé en pourcentage compris entre 0% et 100%, un pourcentage faible indiquant un manque de vigilance alors qu'un pourcentage élevé indique une vigilance normale.

Si l'indice de vigilance Iv est amené à être affiché, par exemple sur le pupitre 4, alors, pour améliorer la lisibilité, il peut être exprimé suivant une échelle symbolique. A titre d'exemple illustratif, l'échelle symbolique est constituée par des symboles VERT, ORANGE et ROUGE, le symbole VERT indiquant une vigilance normale, le symbole ORANGE indiquant une dégradation de la vigilance, et le symbole ROUGE indiquant une vigilance insuffisante.

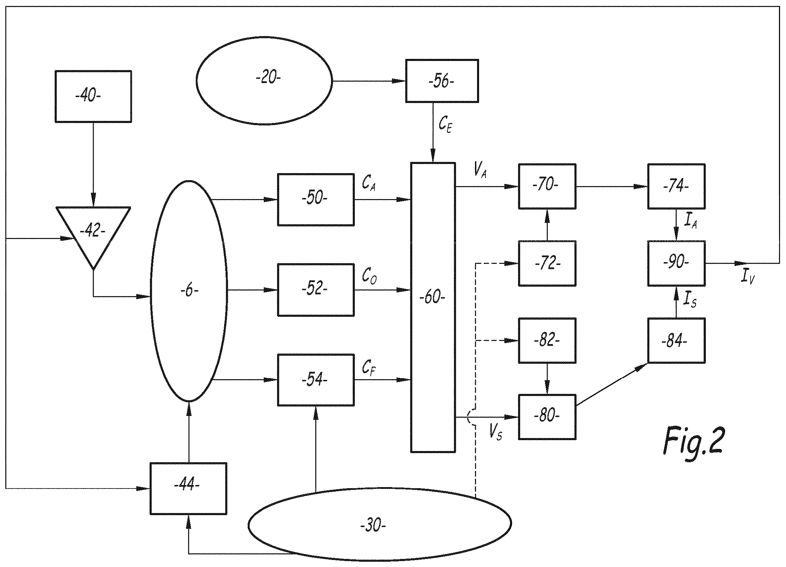

Les dispositifs 8 et 10 forment ensemble un système 12 de supervision de la conduite du véhicule 2, dont un exemple de fonctionnement est illustré à la figure 2.

Les dispositifs 8 et 10 sont couplés entre eux au sein du système 12, pour permettre une prise en compte de l'état de vigilance du conducteur 6 dans l'affichage des informations par le dispositif 8, comme expliqué dans ce qui suit. Le conducteur 6 ne fait pas partie du système 12.

Dans cet exemple, le système 12 est également agencé pour collecter des données relatives à un environnement 20 du véhicule 2 ainsi qu'à un contexte fonctionnel 30.

Le système 12 comporte un module 40 de génération des informations à l'attention du conducteur 6 et un module 42 de modification des informations générées.

Les modules 40 et 42 font ici partie du dispositif 8. Le module 40 est ici connecté à l'interface homme-machine du pupitre 4, pour afficher les messages générés.

Le module 40 est ici un module logiciel implémenté par un calculateur électronique du dispositif 8, tel qu'un micro-ordinateur. Ce calculateur électronique est notamment pourvu d'une unité logique programmable, telle qu'un microprocesseur, et d'un support d'enregistrement d'informations, tel qu'une mémoire informatique, qui contient des instructions exécutables pour mettre en œuvre le fonctionnement du module 40 lorsqu'elles sont exécutées par l'unité logique programmable. Il en va de même pour le module 42, qui est ici implémenté par le même calculateur que le module 40.

Par exemple, le calculateur électronique implémentant le module 40 est connecté à l'ordinateur de bord du pupitre 4 au moyen d'une liaison de données, de type Ethernet ou de type bus de terrain.

Le module 42 est programmé pour modifier ou moduler le flux de messages généré par le module 40 en fonction de l'état de vigilance du conducteur 6 tel que représenté par l'indice de vigilance I_{V}, et selon un ensemble de règles prédéfinies. Le module 42 est ici connecté entre le module 40 et l'interface homme-machine du pupitre 4, pour intercepter ce flux de messages avant son affichage et pour modifier la façon dont les messages générés par le module 40 sont affichés sur le pupitre 4 et/ou pour empêcher l'affichage de certains messages générés, en fonction de l'indice de vigilance I_{V}. A cet effet, le module 42 est en outre connecté au dispositif 10 de manière à acquérir l'indice de vigilance I_{V} calculé par le dispositif 10, par exemple sous la forme d'un signal représentatif de la valeur de l'indice de vigilance I_{V}.

Dans cet exemple, chaque message généré par le module 40 est associé à un niveau de priorité, qui indique avec quelle priorité le message doit être affiché par rapport à d'autres messages.

Chaque message est également associé à une caractéristique d'affichage, qui spécifie la façon dont le message doit être affiché sur l'interface du pupitre 4. Par exemple, lorsque le message est destiné à être transmis au conducteur 6 sous forme sonore, la caractéristique d'affichage définit le niveau d'amplitude sonore avec lequel le message sera joué par le haut-parleur de l'interface homme-machine. Lorsqu'il s'agit d'un message visuel destiné à être affiché sur un écran, la caractéristique d'affichage précise la façon dont cet affichage doit être réalisé : emplacement sur l'écran, présentation sous une forme qui attire l'attention du conducteur 6 comme une fenêtre surgissante ou un message clignotant.

Les messages générés par le module 40 sont par exemple chacun incorporés dans une trame de données qui contient également le niveau de priorité et l'indicateur d'affichage associés à ce message.

Par exemple, lorsque le module 42 reçoit les messages générés par le module 40, et que l'indice I_{V} indique une perte de vigilance du conducteur 6 inférieure à un seuil de sécurité prédéfini, seuls les messages du flux ayant un certain niveau de priorité sont affichés à destination du conducteur 6, éventuellement en augmentant leur visibilité. En variante, pour les messages présentant une importance moindre, le module 42 peut modifier leur indicateur d'affichage pour qu'ils soient présentés au conducteur 6 de façon moins proéminente ou, en variante, empêcher l'affichage de ces messages. Ce choix est réalisé automatiquement, en fonction de l'indice I_{V} et de l'ensemble de règles prédéfinies.

De cette manière, les informations importantes ne sont pas noyées parmi des informations moins importantes qui pourraient distraire le conducteur 6.

Avantageusement, le dispositif 8 comporte un module 44 de génération d'alerte, configuré pour générer une alerte de sécurité destinée au conducteur 6 lorsque l'indice de vigilance I_{V} indique une perte de vigilance critique du conducteur 6, par exemple parce qu'il est inférieur à un seuil prédéfini ou qu'il subit une variation supérieure à un seuil critique.

Par exemple, ce module 44 est connecté au pupitre 4 de manière à émettre l'alerte au moyen de l'interface homme-machine du pupitre 4, sous la forme d'un signal sonore audible ou d'un signal visuel. L'alerte peut également être émise par voie haptique au moyen du manipulateur de traction du pupitre 4. Par exemple, le manipulateur de traction est pourvu d'un servomoteur adapté pour exercer un effet de retour de force, et/ou est pourvu d'un vibreur adapté pour produire une vibration du manipulateur.

D'autres façons d'émettre cette alerte sont cependant possibles. Par exemple, ce module 44 est connecté à un système de vibration d'un ou plusieurs éléments du siège sur lequel se trouve le conducteur 6, comme l'assise, un accoudoir ou le dossier. Le module 44 peut aussi être connecté à un système de gestion de l'air circulant dans la cabine où se trouve le conducteur 6, pour diminuer la température ou augmenter le niveau d'air pulsé. Selon une autre possibilité, le module 44 peut également être connecté à un système de commande de lampes de couleur bleue et d'intensité variable, destinées à éclairer la cabine dans laquelle se trouve le conducteur 6, l'intensité des lampes étant pilotée par le niveau de vigilance Iv, par exemple avec le niveau le plus faible de vigilance correspondant au niveau de luminance le plus élevé.

Le module 44 est en outre connecté au dispositif 10 de manière à acquérir l'indice de vigilance I_{V} calculé par le dispositif 10. Le module 44 est ici un module logiciel implémenté par le même calculateur que le module 40.

Dans cet exemple, plusieurs seuils de sécurité sont prédéfinis, allant d'un niveau peu critique, pour lequel l'alerte doit susciter un changement de comportement du conducteur 6, à un niveau critique, dans le cas où le conducteur 6 est dans un état nécessitant l'arrêt du véhicule 2 pour des raisons de sécurité.

L'estimation de l'état de vigilance du conducteur 6 est ici réalisée par le dispositif 10 en :
- mesurant des caractéristiques observables du conducteur 6, par exemple se rapportant à des états physiologiques et cognitifs du conducteur 6 ;
- construisant un indicateur I_{S} représentatif d'un niveau de somnolence et un indicateur I_{A} représentatif d'un niveau d'attention du conducteur 6, à partir des caractéristiques observables mesurées ; et en
- calculant l'indice de vigilance I_{V} à partir des indicateurs I_{A}, I_{S} construits.

Les caractéristiques observables du conducteur 6 comportent ici des caractéristiques oculométriques relatives aux yeux du conducteur 6, notées C_{O}, et des caractéristiques faciales du conducteur 6, notées C_{A}.

Les mesures sont avantageusement réalisées de façon non-intrusive pour le conducteur 6. En particulier, le conducteur 6 n'interagit pas directement avec le dispositif 10. Dans le cas où il peut agir avec le système 10, cette interaction ne va pas au-delà des interactions normales du conducteur avec des instruments de commande du véhicule 2 lors du pilotage du véhicule 2.

A cet effet, le dispositif 10 comporte un ensemble 50 de mesure de caractéristiques faciales C_{A} du conducteur 6, un ensemble 52 de mesure de caractéristiques oculométriques C_{O} du conducteur 6 et un ensemble 54 de mesure de caractéristiques comportementales C_{F} du conducteur 6 se rapportant au contexte fonctionnel 30.

L'ensemble 50 comporte un appareil de mesure et un module de traitement des données mesurées.

Dans cet exemple, la mesure réalisée par l'ensemble 50 comporte l'acquisition d'images du visage du conducteur 6, puis la détermination des caractéristiques C_{A} à partir des images acquises. Ces images sont acquises sous la forme d'une succession de photographies ou sous la forme d'un flux vidéo. Ainsi, l'ensemble 50 comporte au moins un capteur d'image, par exemple une ou plusieurs caméras vidéo, jouant le rôle d'appareil de mesure. Ces caméras sont focalisées de manière à imager le visage du conducteur 6.

Les images ainsi acquises sont enregistrées sous forme numérique et sont ensuite traitées automatiquement par le module de traitement, par exemple en temps réel ou au sein d'une fenêtre temporelle glissante.

Les fenêtres glissantes sont ici dimensionnées spécifiquement pour chaque famille de caractéristiques incluse dans les caractéristiques C_{A}, C_{O} ou C_{F} issues des ensembles 50, 52, et 54, en tenant compte des propriétés technologiques des instruments de mesure et du type de caractéristique. A titre d'exemple, ces propriétés technologiques peuvent s'exprimer en fréquence d'acquisition des mesures, différentes pour chaque appareil, et la taille des fenêtres glissantes est représentée en nombre d'échantillons successifs recueillis. Le dimensionnement des fenêtres est directement dépendant de la vitesse de variation des phénomènes mesurés. Par exemple, les mesures utilisées pour la génération de l'indicateur de somnolence I_{S} sont traitées au sein de fenêtres de taille plus importantes que les mesures utilisées pour la génération de l'indicateur d'attention I_{A}. Les tailles, ou dimensions temporelles des fenêtres sont ici comprises entre 10 secondes et 180 secondes.

Le module de traitement est ici implémenté sous forme logicielle par un calculateur électronique, non illustré, du dispositif 10. Ce calculateur électronique est ici analogue au calculateur électronique du dispositif 8 précédemment décrit. En variante, il peut s'agir d'un calculateur électronique commun.

Par exemple, le module de traitement de l'ensemble 50 est programmé pour extraire automatiquement, à partir des images acquises, des caractéristiques C_{A} sous la forme de descripteurs représentatifs d'une expression faciale du conducteur 6. Cette extraction est réalisée au moyen d'un procédé de traitement d'images, par exemple comme décrit dans l'article de H. Moon et P.J. Phillips, « Computational and performance aspects of PCA-based face-recognition algorithms », Perception, 30(3), p. 301-321, 2001.

Les descripteurs extraits sont exprimés en fonction d'un modèle prédéfini, tel qu'un modèle biophysique. On utilise par exemple le modèle connu sous le nom de « Facial Action Coding System », abrévié FACS, et décrit dans l'ouvrage de P.E. Friesen et al. « The Facial Action Coding System », Weidenfeld & Nicolson, 2002. Selon ce modèle, l'expression faciale du conducteur 6 telle que figurant sur chaque image acquise est décomposée en une pluralité de descripteurs, ou unités d'action, associées à des états d'excitation de différents muscles faciaux et/ou à des configurations faciales du conducteur 6.

Ce traitement peut être répété au cours du temps, pour chacune des images acquises par les appareils de mesure de l'ensemble 50.

Dans cet exemple, on utilise vingt des descripteurs du modèle FACS sur les quarante-et-un descripteurs connus dans ce modèle, mais d'autres façons de procéder sont possibles. A titre d'exemple illustratif, l'un des descripteurs, nommé « 43 - eyes closed » prend une valeur représentative de l'état d'ouverture ou de fermeture des yeux du conducteur 6.

Avantageusement, des caractéristiques faciales additionnelles du conducteur 6, dites caractéristiques émotionnelles, sont calculées automatiquement par le module de traitement de l'élément 50 à partir des descripteurs ainsi déterminés. Ces caractéristiques émotionnelles sont par exemple basées sur le modèle tel que décrit par J. Russel, « A circumplex model of affect », Journal of Personality and Social Psychology, 39, p. 1161-1178, 1980 et permettent de quantifier l'attraction négative ou positive ressentie par le conducteur 6. Ce phénomène d'attraction est connu en sciences de psychologie en tant que facteur d'activation ou « arousal » en langue anglaise.

En variante, le module de traitement de l'élément 50 peut également déterminer d'autres caractéristiques émotionnelles à partir des images acquises, par exemple pour déterminer un état d'émotion du conducteur 6, ici au moyen du modèle décrit dans l'article de P. Elkman, « An Argument for basic emotions », Cognition and Emotion, 6, 6(3-4), p. 169-200, 1992, qui définit plusieurs catégories d'émotions de base.

A cet effet, le module de traitement met en œuvre automatiquement, à partir des images acquises, une procédure de traitement d'image comportant des étapes de détection du visage, de modélisation du visage et de classification du visage du conducteur 6 parmi l'une des catégories du modèle. Ces étapes sont par exemple réalisées au moyen des méthodes décrites respectivement dans les documents suivants :
- P. Viola et al, « Robust real-time face detection », International Journal of Computer Vision, 57(2), p. 137-154, 2004 ;
- T. C. Taylor, "Statistical models of appearance for computer vision", Technical report, University of Manchester, Imaging Science and Biomedical Engineering, 2000 ;
- C. Bishop "Neural Networks for Pattern Recognition", Oxford, 1995.

Dans le présent exemple, les caractéristiques C_{A} mesurées par l'ensemble comportent un ensemble de descripteurs du modèle FACS ainsi que des caractéristiques émotionnelles.

Les caractéristiques C_{A} ainsi mesurées par l'ensemble 50 sont stockées dans une structure de données appropriée.

L'ensemble 52 comporte un appareil de mesure et un module de traitement des données mesurées.

Dans cet exemple, la mesure réalisée par l'ensemble 52 comporte l'acquisition d'images des yeux du conducteur 6, puis la détermination des caractéristiques C_{O} à partir des images acquises.

Les images des yeux sont ici acquises sous forme d'une succession d'images ou d'un flux vidéo. Ainsi, l'ensemble 52 comporte un ou plusieurs oculomètres, par exemple des oculomètres stéréoscopiques à infrarouge, jouant le rôle d'appareil de mesure.

Ces images sont de préférence acquises dans le spectre infrarouge, de manière à ne pas perturber la vision du conducteur 6. L'ensemble 52 comporte alors une source de lumière infrarouge pour éclairer le conducteur 6 lors de l'acquisition des images.

Les images ainsi acquises sont enregistrées sous forme numérique et sont ensuite traitées automatiquement par le module de traitement de l'ensemble 52, par exemple en temps réel ou au sein d'une fenêtre temporelle glissante.

De façon analogue à ce qui est décrit en référence à l'ensemble 50, le module de traitement de l'ensemble 52 est ici un module logiciel implémenté par le calculateur électronique du dispositif 10.

Le module de traitement de l'ensemble 52 est programmé pour extraire une ou plusieurs des caractéristiques oculométriques C_{O} suivantes à partir des images acquises l'appareil de mesure de l'ensemble 52 :
- position de la tête du conducteur 6 dans un repère fixe de l'oculomètre,
- données quantitatives sur la direction du regard,
- point de vergence du regard, exprimé dans le repère de l'oculomètre,
- détection de clignement d'yeux et estimation de la fréquence de clignement des yeux ;
- calcul des saccades du regard et des points de fixation ;
- durée de fixation ;
- variation du diamètre de la pupille.

Les caractéristiques ainsi mesurées par l'ensemble 52 sont stockées dans une structure de données appropriée.

Ainsi, la mesure à la fois des caractéristiques C_{A} et C_{O} permet d'obtenir une mesure redondante des caractéristiques observables du conducteur 6, conduisant à une estimation de l'état de vigilance plus précise.

L'ensemble 54 comporte une interface de mesure et un module de traitement des données mesurées.

L'interface de mesure de l'ensemble 54 est ici connectée au pupitre 4, par exemple par l'intermédiaire de l'ordinateur de bord, pour mesurer les interactions du conducteur 6 avec les commandes de pilotage du véhicule 2. L'activité du conducteur 6 enregistrée sous la forme de trames d'activité qui répertorient les interactions du conducteur 6 avec les commandes du pupitre 4 au cours du temps.

Parmi les interactions enregistrées figurent ici, à titre non limitatif : la position du manipulateur de traction, l'activation de l'avertisseur sonore, l'activation de la vigilance active ou encore la commande d'ouverture ou fermeture des portes d'accès aux passagers. L'ensemble 54 enregistre également, en fonction du temps, la vitesse et la position du véhicule 2, telle que mesurées par des équipements appropriés du véhicule 2.

Le module de traitement est adapté pour déterminer des caractéristiques de comportement C_{F} du conducteur 6 à partir des trames de référence ainsi enregistrées.

L'enchaînement des actions enregistrées dans les trames est comparé à des données telles que des séquences de référence, par exemple, au moyen d'un modèle mathématique particulier appelé machine séquentielle, cette dernière étant paramétrée de manière à correspondre au contexte fonctionnel 30. Le résultat de la comparaison est présenté sous la forme d'un indicateur binaire de type vrai/faux.

De même, les valeurs mesurées, par exemple de vitesse, sont comparées à des données de référence telles que des valeurs limite ou des intervalles de référence. Le résultat de la comparaison est présenté sous la forme d'un indicateur binaire de type vrai/faux selon qu'un dépassement est détecté ou non.

Par exemple, les enchaînements de référence correspondent à des actions attendues de la part du conducteur 6, en fonction du contexte dans lequel se trouve le véhicule 2 à un instant donné, et qui sont imposées par des considérations réglementaires et/ou normatives.

A titre d'exemple, dans le cadre d'un véhicule 2 de type tramway circulant en milieu urbain sous un régime de marche à vue, les attitudes attendues de la part du conducteur 6 sont les suivantes :
- passage des intersections rail/route avec le manipulateur de traction en position neutre,
- actionnement de l'avertisseur sonore lors de l'entrée en station et avant chaque mise en mouvement du véhicule 2,
- respect de limitations de vitesse spécifiques lors de l'entrée en station ou lors du franchissement d'un appareil de voie,
- éviter la circulation prolongée en sous-vitesse par rapport à la vitesse maximale autorisée, la sous-vitesse étant par exemple quantifiée comme étant le temps passé en circulant avec une vitesse de moins de 10km/h par rapport à la vitesse maximale autorisée ;
- la stabilité de la gestion de la traction ou du freinage, ici mesuré en surveillant le nombre de variations de la position du manipulateur de traction au cours du temps.

Par exemple, la position des croisements, des appareils de voie, des stations et des zones de vitesse limitée sont connues et enregistrées dans une structure de données. Lorsque la position du véhicule 2 est détectée comme correspondant à une de ces positions, la valeur enregistrée du paramètre de commande correspondant, tel que la position du manipulateur de traction, est comparée avec les données de référence.

Le module de traitement de l'ensemble 54 permet donc de détecter des anomalies dans l'exécution de séquences d'action attendues de la part du conducteur 6, ce qui fournit indirectement une information sur l'état de vigilance du conducteur 6.

Avantageusement, l'ensemble 54 comporte également une caméra vidéo agencée de manière à acquérir une vue du conducteur 6 au sein de la cabine de pilotage, selon une configuration de type « scène ». Le module de traitement est alors en outre programmé pour analyser la posture du conducteur et la comparer à une posture de référence, ou encore pour mesurer des interactions du conducteur 6 avec le pupitre 4, par exemple pour détecter l'orientation de la tête du conducteur 6 ou la position d'un de ses membres. Le module de traitement est alors configuré pour extraire des invariants observables issus des images ou du flux vidéo acquis avec la caméra.

Dans cet exemple, les invariants observables sont utilisés pour caractériser le conducteur. A titre d'exemple illustratif, le bras du conducteur est identifié dans l'image et sa position est extraite par traitement numérique, par exemple comme suit :
- créer une carte de disparité par calcul entre l'image en temps réel et une image de référence de la cabine sans conducteur, pour isoler l'image du conducteur de l'environnement de la cabine,
- procéder à des traitements numériques pour identifier les invariants observables dans l'image à partir de la carte obtenue, par exemple au moyen des algorithmes décrits dans H. Burkhardt and S. Siggelkow. Invariant features in pattern recognition - fundamentals and applications. In C. Kotropoulos and I. Pitas, editors, Nonlinear Model-Based Image/Video Processing and Analysis, pages 269-307. John Wiley and Sons, 2001 ou dans A. W. M. Smeulders, J. M. Geusebroek, and T. Gevers. Invariant representation in image processing. In IEEE ICIP, volume 3, pages 18-21, 2001.
- comparer les invariants identifiés par classification à des invariants de référence, le résultat de la classification étant interprété pour détecter la posture et/ou les interactions du conducteur 6 avec le pupitre 4. Des exemples d'algorithmes utilisés sont décrits dans les librairies de fonctions en traitement d'images. Les caractéristiques ainsi mesurées par l'ensemble 54 sont stockées dans une structure de données appropriée.

De façon avantageuse, les caractéristiques C_{F} mesurées par l'ensemble 54 sont fournies au module 44. Le déclenchement d'une alerte/alarme par ce dernier est alors également fonction de l'état de vigilance du conducteur 6 tel que quantifié par les caractéristiques C_{F}.

De même, avantageusement, les caractéristiques C_{A}, C_{O} mesurées par les ensembles 50, 52 sont fournies au module 44. Le déclenchement d'une alerte/alarme par ce dernier est alors également fonction de l'état de vigilance du conducteur 6 tel que quantifié par les caractéristiques C_{A}, C_{O}.

De façon préférentielle, le dispositif 10 comporte en outre un ensemble 56 de mesure des conditions environnementales 20.

Les conditions environnementales 20, ou contexte environnemental 20, désignent ici l'ensemble des paramètres physiques associés à l'environnement extérieur du véhicule 2 et susceptibles d'affecter le conducteur 6 et/ou d'affecter le dispositif 10, parmi lesquels figurent, à titre non limitatif, la luminosité, la température, les conditions météorologiques, ou encore l'heure de la journée.

Par exemple, une luminosité élevée peut gêner la vision du conducteur 6 et induire une tendance à fermer les yeux quand bien même il n'est pas fatigué. Cette prise en compte des conditions environnementales permet d'éviter une mauvaise interprétation des caractéristiques mesurées par les ensembles 50 et 52.

De façon analogue aux ensembles 50 et 52, l'ensemble 56 comporte ici un ou plusieurs instruments de mesure et un module de traitement des données mesurées par les instruments. Les instruments de mesure comportent par exemple un capteur de luminosité et/ou un capteur de température et/ou une interface de communication adaptée pour collecter des informations depuis un serveur distant, par exemple pour recueillir des informations sur les conditions météorologiques depuis un fournisseur spécialisé.

Le module est adapté pour estimer, à partir des données mesurées, des caractéristiques C_{E} représentatives de l'environnement 20. Ces caractéristiques C_{E} sont ici présentées sous la forme d'une matrice à coefficients réels, comprenant, pour chaque paramètre de l'environnement, une première valeur réelle associée à l'impact de ce paramètre sur l'attention du conducteur 6 et une deuxième valeur associée à l'impact de ce paramètre sur la somnolence du conducteur 6.

Comme expliqué précédemment, le dispositif 10 est en outre programmé pour calculer, ou construire, les indicateurs I_{A}, I_{S} et l'indice de vigilance I_{V}. Par exemple, le calculateur électronique du dispositif 10 précédemment décrit comporte des instructions exécutables pour la mise en œuvre d'un tel calcul.

A cet effet, le dispositif 10 comporte :
- un module de vectorisation 60, qui reçoit en entrée les caractéristiques mesurées par les modules 50, 52, 54 et 56 pour générer des vecteurs d'activité V_{A} et de somnolence V_{S} ;
- des modules de normalisation 70, d'expertise 72 et de génération 74 d'un indicateur d'attention, pour calculer l'indicateur d'attention I_{A} en fonction du vecteur V_{A} et du contexte fonctionnel 30 ;
- des modules de normalisation 80, d'expertise 82 et de génération 84 d'un indicateur de somnolence, pour calculer l'indicateur de somnolence I_{S} en fonction du vecteur V_{S} et du contexte fonctionnel 30;
- un module 90 de calcul de l'indice de vigilance I_{V} à partir des indicateurs I_{A} et I_{S}.

Les modules 60, 70, 72, 74, 80, 82, 84 et 90 représentent ici des fonctions qui peuvent être réalisées par un même calculateur électronique, par exemple celui du dispositif 10. En variante, ces fonctions peuvent être distribuées entre plusieurs calculateurs électroniques distincts connectés entre eux, ou encore être chacune implémentée par un calculateur électronique distinct.

Le module 60 de vectorisation a pour fonction de transformer les caractéristiques mesurées par les modules 50, 52, 54 et 56 sous une forme permettant leur exploitation ultérieure par les modules 70, 72, 74 et 80, 82, 84 respectivement en vue de générer les indicateurs I_{A} et I_{S}.

Par exemple, le module 60 comporte un modèle interne dans lequel des symptômes prédéterminés de défaut d'attention et de somnolence sont définis en fonction des valeurs que prennent les caractéristiques C_{A}, C_{O}, C_{E} et C_{F}.

En fonction de ce modèle interne et des caractéristiques reçues, le module 60 génère un vecteur d'activité V_{A}, dont les coefficients représentent chacun une valeur associée à un symptôme de perte d'attention du modèle interne, calculée en fonction des caractéristiques C_{O}, C_{A} , C_{F} et en fonction des caractéristiques C_{E} qui sont susceptibles d'influer sur l'interprétation de ces caractéristiques. Ces coefficients sont par exemple notés a1, a2, ..., an, où n est un nombre entier représentant le nombre de symptômes de perte d'attention.

De façon analogue, le module 60 génère un vecteur de somnolence V_{S}, dont les coefficients représentent chacun une valeur associée à un symptôme de somnolence du modèle interne, calculée en fonction des caractéristiques C_{O}, C_{A}, C_{F} et en fonction des caractéristiques C_{F} qui sont susceptibles d'influer sur l'interprétation de ces caractéristiques. Ces coefficients sont par exemple notés s1, s2, ..., sm, où m est un nombre entier représentant le nombre de symptômes de somnolence.

Le module 70 effectue une normalisation du vecteur V_{A} en fonction de données contextuelles fournies par le module d'expertise 72. La normalisation consiste ici à transformer des données hétérogènes, pour les ramener sur une échelle commune, de sorte à permettre leur comparaison ultérieure.

Par exemple, la normalisation génère un vecteur V_{A}' de coefficients a'1, a'2, ... a'n, dont les valeurs sont décimales et comprises entre 0 et 1, et sont respectivement :
- égales à 1 si le coefficient correspondant a1, a2, ..., an est représentatif d'un état d'attention nominal, et
- égales à 0 si le coefficient correspondant a1, a2, ..., an est représentatif d'un état d'attention de surcharge mentale avérée.

Par exemple, une normalisation linéaire de type « min-max » est choisie. Les bornes minimum et maximum correspondent aux valeurs prises par les caractéristiques et à partir desquelles les modes de référence pour un symptôme sont atteints. Pour la prise en compte des contextes environnementaux, les valeurs des bornes minimum et maximum sont fournies sous la forme d'une matrice P(A), de préférence ordonnée de façon à être compatible avec le vecteur V_{A}.

Le module 72 est ici programmé pour fournir la matrice P(A) en fonction des caractéristiques C_{E} mesurées par le module 56.

Le module 74 construit l'indice I_{A} au moyen d'un opérateur d'agrégation, par exemple selon une méthode connue sous le nom de « soft-voting » en langue anglaise.

La matrice P(A) est ici obtenue au préalable, par exemple par expertise et par expérimentation, notamment en tenant compte des caractéristiques C_{F} relatives au contexte fonctionnel 30.

A titre d'exemple, la matrice P(A) comporte les valeurs des bornes de normalisation, ordonnées de manière à correspondre au contexte de l'environnement en temps réel. Par exemple, pour des valeurs de caractéristiques C_{E} donnés, seul un sous-ensemble de lignes de la matrice P(A) sera utilisé pour la normalisation. La matrice P(A) est construite comme suit : la première colonne représente les valeurs de la borne minimale d'une caractéristique donnée et la seconde décrit les valeurs de la borne maximale. La matrice P(A) est donnée par P(A) = [p1min p1max ; p2min p2max ; ... ; p_n_min p_n_max]. Le nombre « n » représente le nombre des combinaisons possibles des valeurs des coefficients contextuels pertinents pour lesquels les bornes minimale et maximale des caractéristiques restent invariantes.

Les modules 80, 82 et 84 ont un rôle analogue aux modules, respectivement, 70, 72 et 74 et ne sont pas décrits plus en détail. La construction de l'indice I_{S} est analogue à celle de l'indice I_{A}, si ce n'est qu'elle comporte la normalisation du vecteur V_{S} pour calculer un vecteur V_{S}', jouant un rôle analogue au vecteur VA', et que la normalisation est effectuée en fonction d'une matrice P(S) fournie par le module 82 et qui joue un rôle analogue à celui de la matrice P(A).

Enfin, le module 90 calcule l'indice I_{V} en combinant les indicateurs I_{A} et I_{S}, par exemple au moyen d'une approche de calcul par arbre décisionnel similaire à la référence Yuan, Y., & Shaw, M. J. (1995). « Induction of fuzzy decision trees. Fuzzy Sets and systems », 69(2), 125-139.

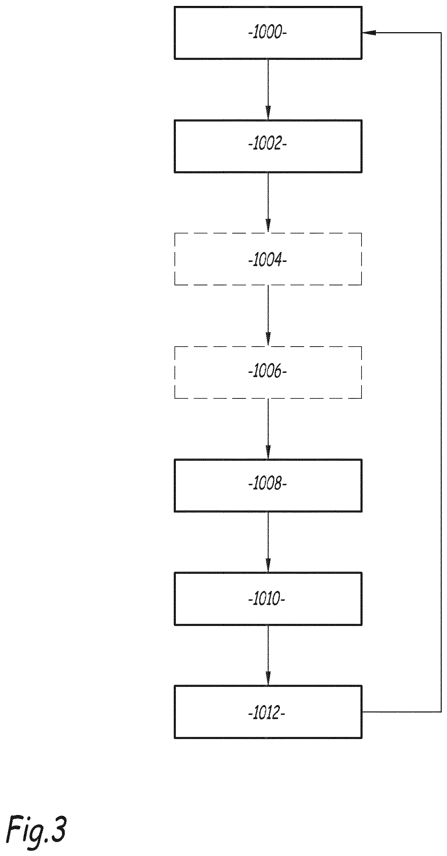

Un exemple de mise en œuvre d'un procédé d'aide à la conduite utilisant le système 12 est maintenant décrit en référence à l'ordinogramme de la figure 3.

D'abord, lors d'une étape 1000, un flux de messages destinés au conducteur 6 est généré par le module 40 du dispositif 10.

Parallèlement, lors d'une étape 1002, le système 10 mesure un état de vigilance du conducteur 6. Dans cet exemple :
- l'ensemble 50 acquiert des images du conducteur 6 et, en réponse, estime les caractéristiques C_{A} ;
- l'ensemble 52 acquiert des images des yeux du conducteur 6 et, en réponse, estime les caractéristiques C_{O} ;

Avantageusement, lors d'une étape 1004, les caractéristiques C_{E} représentatives de l'environnement 20 sont acquises par le dispositif 56.

Parallèlement, lors d'une étape 1006, les caractéristiques C_{F} représentatives du contexte de fonctionnement 30 sont acquises par l'ensemble 54.

Lors d'une étape 1008, l'indice de vigilance I_{V} est calculé à partir des caractéristiques acquises représentatives des niveaux d'attention et de somnolence.

Dans cet exemple, l'indice de vigilance I_{V} est calculé en tenant aussi compte des caractéristiques représentatives de l'environnement acquises lors de l'étape 1004 et des caractéristiques représentatives d'un contexte de fonctionnement acquises lors de l'étape 1006.

Avantageusement, l'étape 1008 comporte, préalablement au calcul de l'indice de vigilance I_{V}, la normalisation des caractéristiques représentatives du niveau d'attention et des caractéristiques représentatives du niveau de somnolence acquises.

A cet effet, les caractéristiques issues des modules 50, 52 et 54 sont vectorisées par le module 60, pour générer les vecteurs V_{A} et V_{S}.

Puis, le vecteur V_{A} est normalisé par le module 70, éventuellement en tenant compte du contexte fonctionnel 30 au moyen du module d'expertise 72. En réponse, le module 74 génère l'indicateur d'attention I_{A}.

De façon analogue, le vecteur V_{S} est normalisé par le module 80, éventuellement en tenant compte du contexte fonctionnel 30 au moyen du module d'expertise 82. En réponse, le module 84 génère l'indicateur de somnolence I_{S}.

Lors de l'étape 1008, le module 90 calcule ensuite l'indice de vigilance I_{V} à partir des indicateurs d'attention I_{A} et de somnolence I_{S}, par exemple par fusion de données.

L"indice de vigilance I_{V} est alors transmis au module 42 du dispositif 8.

Puis, lors d'une étape 1010, le module 42 module le flux de messages générés par le module 40, en fonction de l'indice de vigilance I_{V}, par exemple en modifiant des niveaux de priorité et/ou des caractéristiques d'affichage des messages appartenant au flux de messages, en fonction de l'indice de vigilance I_{V} calculé et selon un ensemble de règles prédéfinies.

Enfin, lors d'une étape 1012, le flux de messages modulé par le module 42 à l'issue de l'étape 1010 est affiché à destination du conducteur 6, ici sur l'interface du pupitre 4. Par exemple, parmi le flux de messages, seuls les messages ayant un niveau de priorité supérieur à un seuil défini en fonction de la valeur de l'indice de vigilance I_{V} sont affichés sur l'interface 4, les autres messages étant supprimés ou leur affichage étant retardé jusqu'à ce que la valeur de l'indice de vigilance I_{V} soit modifiée.

Ainsi, on évite une surcharge du conducteur 6 qui pourrait survenir si trop de messages lui étaient présentés alors que sa vigilance est réduite.

Optionnellement, comme expliqué précédemment, le procédé en outre une étape, non illustrée, d'émission d'une alerte de sécurité à l'attention du conducteur 6 au moyen du module de génération d'alerte 44 lorsque l'indice de vigilance I_{V} calculé indique un défaut de vigilance du conducteur 6.

Le procédé est ici répété en boucle tant qu'un flux de messages est généré par le module 40.

## Revendications

1. Procédé d'aide à la conduite d'un véhicule ferroviaire (2) comportant un pupitre de pilotage (4) pour un conducteur (6) du véhicule ferroviaire (2), ce procédé comportant des étapes :
a) de génération (1000), par un dispositif d'aide à la conduite (8) d'un système de supervision (12) du véhicule ferroviaire (2), d'un flux de messages d'information destinés à être affichés à destination du conducteur (6) du véhicule (2) ;
b) d'estimation d'un état de vigilance du conducteur (6), cette estimation comportant :
• la mesure (1002), par un dispositif de surveillance (10) du système de supervision (12), de caractéristiques (C_{A}, C_{O}) observables du conducteur (6) ;
• la mesure (1006) de caractéristiques de comportement (C_{F}) du conducteur représentatives d'un contexte de fonctionnement du véhicule ferroviaire (2), par une interface de mesure d'un deuxième ensemble d'analyse (54) de caractéristiques comportementales (C_{F}) du conducteur (6) se rapportant au contexte fonctionnel (30) du dispositif de surveillance (10) qui mesure des interactions du conducteur (6) avec le pupitre de pilotage (4) pour détecter par un module de traitement des données mesurées de l'ensemble d'analyse de caractéristiques comportementales (54) des anomalies dans l'exécution de séquences d'action attendues de la part du conducteur (6), l'activité du conducteur 6 étant enregistrée sous la forme de trames d'activité qui répertorient les interactions du conducteur (6) avec les commandes du pupitre (4) au cours du temps, le module de traitement des données mesurées du deuxième ensemble de mesure (54) déterminant les caractéristiques de comportement (C_{F}) du conducteur en comparant l'enchainement des trames enregistrées à des séquences de références, les interactions enregistrées comportant : la position du manipulateur de traction du véhicule ferroviaire (2) et/ou l'activation d'un avertisseur sonore du véhicule ferroviaire (2) et/ou l'activation de la vigilance active du véhicule ferroviaire (2) et/ou la commande d'ouverture ou fermeture de portes d'accès du véhicule ferroviaire (2) ;
• la construction (1008), par le dispositif de surveillance (10), d'un indicateur représentatif d'un niveau de somnolence (I_{S}) et d'un indicateur représentatif d'un niveau d'attention (I_{A}) du conducteur (6), à partir des caractéristiques observables mesurées et en fonction des caractéristiques de comportement (C_{F}) représentatives du contexte de fonctionnement mesurées ;
• de calcul (1008), par le dispositif de surveillance (10), d'un indice de vigilance (I_{V}) représentatif de l'état de vigilance du conducteur (6), à partir des indicateurs (I_{A}, I_{S}) construits représentatifs des niveaux d'attention et de somnolence ;
c) de modulation (1010), par le dispositif d'aide à la conduite (8), du flux de messages d'information généré, en fonction de l'indice de vigilance calculé (I_{V}) ;
d) d'affichage (1012), sur le pupitre de pilotage (4) et à destination du conducteur (6), du flux de messages modulé lors de l'étape c).

2. Procédé selon la revendication 1, **caractérisé en ce que** lors de l'étape c), la modulation (1010) comporte la modification, par le dispositif d'aide à la conduite (8), de niveaux de priorité et/ou de caractéristiques d'affichage des messages appartenant au flux de messages, en fonction de l'indice de vigilance (I_{V}) calculé et selon un ensemble de règles prédéfinies.

3. Procédé selon l'une des revendications précédentes, **caractérisé en ce que** le procédé comporte en outre la mesure (1004) de caractéristiques (C_{E}) représentatives d'un environnement du véhicule ferroviaire (2), par un premier ensemble d'analyse (56) du dispositif de surveillance (10), et **en ce que**, lors de l'étape b), les indicateurs représentatifs des niveaux de somnolence (I_{S}) et d'attention (I_{A}) du conducteur (6) sont construits en fonction des caractéristiques (C_{E}) représentatives de l'environnement du véhicule ferroviaire mesurées.

4. Procédé selon l'une des revendications précédentes, **caractérisé en ce que**, lors de l'étape b), les caractéristiques observables mesurées comportent des caractéristiques oculométriques (C_{O}) relatives aux yeux du conducteur (6) mesurées au moyen d'un troisième ensemble de mesure (52) du dispositif de surveillance (10) pourvu d'un oculomètre.

5. Procédé selon l'une des revendications précédentes, **caractérisé en ce que**, lors de l'étape b), les caractéristiques observables mesurées comportent des caractéristiques faciales (C_{A}) du conducteur (6) mesurées au moyen d'un quatrième ensemble de mesure (50) du dispositif de surveillance (10) pourvu d'un capteur d'image.

6. Procédé selon l'une des revendications précédentes, **caractérisé en ce que** lors de l'étape b), le calcul de l'indice de vigilance (I_{V}) comporte la combinaison des indicateurs représentatifs des niveaux de somnolence (I_{S}) et d'attention (I_{A}) par fusion de données.

7. Procédé selon l'une des revendications précédentes et avantageusement selon la revendications 3, **caractérisé en ce que** l'étape b) comporte, préalablement à la construction des indicateurs représentatifs des niveaux de somnolence (I_{S}) et d'attention (I_{A}), une normalisation des caractéristiques observables (C_{A}, C_{O}) mesurées, de préférence en fonction des caractéristiques représentatives du contexte de fonctionnement du véhicule ferroviaire et de l'environnement du véhicule ferroviaire (C_{F},C_{E}).

8. Procédé selon l'une des revendications précédentes, **caractérisé en ce que** le procédé comporte en outre une étape d'émission d'une alerte de sécurité à l'attention du conducteur (6) au moyen d'un module de génération d'alerte (44) lorsque l'indice de vigilance (I_{V}) calculé indique un défaut de vigilance du conducteur (6).

9. Véhicule ferroviaire (2) comportant un pupitre de pilotage (4) pour un conducteur (6) du véhicule ferroviaire (2), comportant en outre un système de supervision (12) comprenant un dispositif (8) d'aide à la conduite du véhicule ferroviaire (2) et un dispositif (10) de surveillance d'un état de vigilance du conducteur (6), ce système de supervision (12) étant programmé pour mettre en œuvre des étapes :
a) de génération (1000), par le dispositif d'aide à la conduite (8), d'un flux de messages d'information destinés à être affichés à destination d'un conducteur (6) du véhicule (2) ;
b) d'estimation d'un état de vigilance du conducteur (6), cette estimation comportant :
• la mesure (1002), par le dispositif de surveillance (10), de caractéristiques (C_{A}, C_{O}) observables du conducteur (6) ;
• la mesure (1006) de caractéristiques de comportement (C_{F}) du conducteur représentatives d'un contexte de fonctionnement du véhicule ferroviaire (2), par une interface de mesure d'un deuxième ensemble de d'analyse (54) de caractéristiques comportementales (C_{F}) du conducteur (6) se rapportant au contexte fonctionnel (30) du dispositif de surveillance (10) qui mesure des interactions du conducteur (6) avec le pupitre de pilotage (4) pour détecter par un module de traitement des données mesurées de l'ensemble d'analyse de caractéristiques comportementales (54) des anomalies dans l'exécution de séquences d'action attendues de la part du conducteur (6), l'activité du conducteur 6 étant enregistrée sous la forme de trames d'activité qui répertorient les interactions du conducteur (6) avec les commandes du pupitre (4) au cours du temps, le module de traitement des données mesurées du deuxième ensemble de mesure (54) déterminant les caractéristiques de comportement (C_{F}) du conducteur en comparant l'enchainement des trames enregistrées à des séquences de références, les interactions enregistrées comportant : la position d'un manipulateur de traction du véhicule ferroviaire (2) et/ou l'activation d'un avertisseur sonore du véhicule ferroviaire (2) et/ou l'activation de la vigilance active du véhicule ferroviaire (2) et/ou la commande d'ouverture ou fermeture de portes d'accès du véhicule ferroviaire (2) ;
• la construction (1008), par le dispositif de surveillance (10), d'un indicateur représentatif d'un niveau de somnolence (I_{S}) et d'un indicateur représentatif d'un niveau d'attention (I_{A}) du conducteur (6), à partir des caractéristiques observables mesurées et en fonction des caractéristiques de comportement (C_{F}) représentatives du contexte de fonctionnement mesurées ;
• de calcul (1008), par le dispositif de surveillance (10), d'un indice de vigilance (I_{V}) représentatif de l'état de vigilance du conducteur (6), à partir des indicateurs (I_{A}, I_{S}) construits représentatifs des niveaux d'attention et de somnolence ;
c) de modulation (1010), par le dispositif d'aide à la conduite (8), du flux de messages d'information générés, en fonction de l'indice de vigilance calculé (I_{V}) ;
d) d'affichage (1012), sur le pupitre de pilotage (4) et à destination du conducteur (6), du flux de messages modulé lors de l'étape c).

## Patentansprüche

1. Verfahren zur Unterstützung des Führens eines Schienenfahrzeugs (2), welches ein Bedienpult (4) für einen Fahrer (6) des Schienenfahrzeugs (2) umfasst, wobei das Verfahren die Schritte umfasst:
a) eines Erzeugens (1000), durch eine Fahr-Unterstützungsvorrichtung (8) eines Überwachungssystems (12) des Schienenfahrzeugs (2), eines Informationsnachrichten-Flusses, welcher dazu vorgesehen ist, dem Fahrer (6) des Fahrzeugs (2) dargestellt zu werden;
b) eines Schätzens eines Wachsamkeitszustands des Fahrers (6), wobei das Schätzen umfasst:
- das Messen (1002), durch eine Beobachtungsvorrichtung (10) des Überwachungssystems (12), von beobachtbaren Charakteristiken (C_{A}, C_{O}) des Fahrers (6);
- das Messen (1006) von Charakteristiken eines Verhaltens (C_{F}) des Fahrers, welche einen Betriebskontext des Schienenfahrzeugs (2) repräsentieren, durch eine Messschnittstelle einer zweiten Analyseanordnung (54) für Verhaltenscharakteristiken (C_{F}) des Fahrers (6), welche sich auf den Betriebskontext (30) der Überwachungsvorrichtung (10) beziehen, welche Interaktionen des Fahrers (6) mit dem Bedienpult (4) misst, um durch ein Modul zur Verarbeitung von gemessenen Daten der Analyseanordnung für Verhaltenscharakteristiken (54) Anomalien in der Ausführung von Handlungsabfolgen zu detektieren, welche von dem Fahrer (6) erwartet werden, wobei die Aktivität des Fahrers (6) in der Form von Aktivitätsrastern gespeichert werden, welche die Interaktionen des Fahrers (6) mit den Anweisungen des Pults (4) über der Zeit erfassen, wobei das Modul zu Verarbeitung der gemessenen Daten der zweiten Messanordnung (54) die Verhaltenscharakteristiken (C_{F}) des Fahrers bestimmt, indem die Verkettung von gespeicherten Rastern mit Referenzabfolgen verglichen wird, wobei die gespeicherten Interaktionen umfassen: die Position des Antriebsmanipulators des Schienenfahrzeugs (2) und/oder die Aktivierung einer Geräusch-Warneinheit des Schienenfahrzeugs (2) und/oder die Aktivierung der aktiven Wachsamkeit des Schienenfahrzeugs (2) und/oder die Anweisung zum Öffnen oder Schließen von Zugangstüren des Schienenfahrzeugs (2);
- das Konstruieren (1008), durch die Überwachungsvorrichtung (10), eines Indikators, welcher ein Niveau der Schläfrigkeit (I_{S}) repräsentiert, und eines Indikators, welcher ein Niveau der Aufmerksamkeit (I_{A}) des Fahrers (6) repräsentiert, ausgehend von den gemessenen beobachtbaren Charakteristiken und als Funktion der gemessenen Verhaltenscharakteristiken (C_{F}), welche den Betriebskontext repräsentieren;
- ein Berechnen (1008), durch die Überwachungsvorrichtung (10), eines Wachsamkeitsindex (I_{V}), welcher den Wachsamkeitszustand des Fahrers (6) repräsentiert, ausgehend von den konstruierten Indikatoren (I_{A}, I_{S}), welche die Niveaus der Aufmerksamkeit und der Schläfrigkeit repräsentieren;
c) eines Modulierens (1010), durch die Fahr-Unterstützungsvorrichtung (8), des erzeugten Informationsnachrichten-Flusses als Funktion des berechneten Wachsamkeitsindex (I_{V});
d) eines Darstellens (1012), auf dem Bedienpult (4) für den Fahrer (6) des während Schritt c) modulierten Nachrichten-Flusses.

2. Verfahren nach Anspruch 1, **dadurch gekennzeichnet, dass** während Schritt c) die Modulation (1010) die Modifikation, durch die Fahr-Unterstützungsvorrichtung (8), von Prioritätsniveaus und/oder von Darstellungscharakteristiken von Nachrichten umfasst, welche zu dem Nachrichten-Fluss gehören, in Funktion des berechneten Wachsamkeitsindex (I_{V}) und gemäß einer Menge von vordefinierten Regeln.

3. Verfahren nach einem der vorhergehenden Ansprüche, **dadurch gekennzeichnet, dass** das Verfahren ferner das Messen (1004) von repräsentativen Charakteristiken (C_{E}) einer Umgebung des Schienenfahrzeugs (2) durch eine erste Analyseanordnung (56) der Überwachungsvorrichtung (10) umfasst, und dass während Schritt b) die Indikatoren, welche die Niveaus der Schläfrigkeit (I_{S}) und der Aufmerksamkeit (I_{A}) des Fahrers (6) repräsentieren, als Funktion der gemessenen repräsentativen Charakteristiken (C_{E}) der Umgebung des Schienenfahrzeugs konstruiert werden.

4. Verfahren nach einem der vorhergehenden Ansprüche, **dadurch gekennzeichnet, dass** während Schritt b) die gemessenen beobachtbaren Charakteristiken okulometrische Charakteristiken (C_{O}) bezüglich der Augen des Fahrers (6) umfassen, welche mittels einer dritten Messanordnung (52) der Überwachungsvorrichtung (10) gemessen werden, welche mit einem Okulometer versehen ist.

5. Verfahren nach einem der vorhergehenden Ansprüche, **dadurch gekennzeichnet, dass** während des Schritts b) die gemessenen beobachtbaren Charakteristiken Gesichtscharakteristiken (C_{A}) des Fahrers (6) umfassen, welche mittels einer vierten Messanordnung (50) der Überwachungsvorrichtung (10) gemessen werden, welche mit einem Bildsensor versehen ist.

6. Verfahren nach einem der vorhergehenden Ansprüche, **dadurch gekennzeichnet, dass** während Schritt b) das Berechnen des Wachsamkeitsindex (I_{V}) die Kombination der Indikatoren, welche die Niveaus der Schläfrigkeit (I_{S}) und der Aufmerksamkeit (I_{A}) repräsentieren, durch Datenfusion umfasst.

7. Verfahren nach einem der vorhergehenden Ansprüche und vorteilhafterweise nach Anspruch 3, **dadurch gekennzeichnet, dass** der Schritt b) vor der Konstruktion der Indikatoren, welche die Niveaus der Schläfrigkeit (I_{S}) und der Aufmerksamkeit (I_{A}) repräsentieren, eine Normalisierung der gemessenen beobachtbaren Charakteristiken (C_{A}, C_{O}) umfasst, vorzugsweise als Funktion der Charakteristiken, welche den Betriebskontext des Schienenfahrzeugs und die Umgebung des Schienenfahrzeugs repräsentieren (C_{F}, C_{E}).

8. Verfahren nach einem der vorhergehenden Ansprüche, **dadurch gekennzeichnet, dass** das Verfahren ferner einen Schritt eines Ausgebens eines Sicherheitsalarms für die Aufmerksamkeit des Fahrers (6) mittels eines Alarm-Erzeugungsmoduls (44) umfasst, wenn der berechnete Wachsamkeitsindex (I_{V}) einen Mangel an Wachsamkeit des Fahrers (6) anzeigt.

9. Schienenfahrzeug (2), umfassend ein Bedienpult (4) für einen Fahrer (6) des Schienenfahrzeugs (2), ferner umfassend ein Überwachungssystem (12), welches eine Fahr-Unterstützungsvorrichtung (8) des Schienenfahrzeugs (2) und eine Vorrichtung (10) zum Überwachen eines Wachsamkeitszustands des Fahrers (6) umfasst, wobei das Überwachungssystem (12) dazu programmiert ist, die Schritte auszuführen:
a) eines Erzeugens (1000), durch die Fahr-Unterstützungsvorrichtung (8), eines Informationsnachrichten-Flusses, welcher dazu vorgesehen ist, dem Fahrer (6) des Fahrzeugs (2) dargestellt zu werden;
b) eines Schätzens eines Wachsamkeitszustands des Fahrers (6), wobei das Schätzen umfasst:
- das Messen (1002), durch die Beobachtungsvorrichtung (10), von beobachtbaren Charakteristiken (C_{A}, C_{O}) des Fahrers (6);
- das Messen (1006) von Charakteristiken eines Verhaltens (C_{F}) des Fahrers, welche einen Betriebskontext des Schienenfahrzeugs (2) repräsentieren, durch eine Messschnittstelle einer zweiten Analyseanordnung (54) für Verhaltenscharakteristiken (C_{F}) des Fahrers (6), welche sich auf den Betriebskontext (30) der Überwachungsvorrichtung (10) beziehen, welche Interaktionen des Fahrers (6) mit dem Bedienpult (4) misst, um durch ein Modul zur Verarbeitung von gemessenen Daten der Analyseanordnung für Verhaltenscharakteristiken (54) Anomalien in der Ausführung von Handlungsabfolgen zu detektieren, welche von dem Fahrer (6) erwartet werden, wobei die Aktivität des Fahrers (6) in der Form von Aktivitätsrastern gespeichert werden, welche die Interaktionen des Fahrers (6) mit den Anweisungen des Pults (4) über der Zeit erfassen, wobei das Modul zu Verarbeitung der gemessenen Daten der zweiten Messanordnung (54) die Verhaltenscharakteristiken (C_{F}) des Fahrers bestimmt, indem die Verkettung von gespeicherten Rastern mit Referenzabfolgen verglichen werden, wobei die gespeicherten Interaktionen umfassen: die Position des Antriebsmanipulators des Schienenfahrzeugs (2) und/oder die Aktivierung einer Geräusch-Warneinheit des Schienenfahrzeugs (2) und/oder die Aktivierung der aktiven Wachsamkeit des Schienenfahrzeugs (2) und/oder die Anweisung zum Öffnen oder Schließen von Zugangstüren des Schienenfahrzeugs (2);
- das Konstruieren (1008), durch die Überwachungsvorrichtung (10), eines Indikators, welcher ein Niveau der Schläfrigkeit (I_{S}) repräsentiert, und eines Indikators, welcher ein Niveau der Aufmerksamkeit (I_{A}) des Fahrers (6) repräsentiert, ausgehend von den gemessenen beobachtbaren Charakteristiken und als Funktion der gemessenen Verhaltenscharakteristiken (C_{F}), welche den Betriebskontext repräsentieren;
- ein Berechnen (1008), durch die Überwachungsvorrichtung (10), eines Wachsamkeitsindex (I_{V}), welcher den Wachsamkeitszustand des Fahrers (6) repräsentiert, ausgehend von den konstruierten Indikatoren (I_{A}, I_{S}), welche die Niveaus der Aufmerksamkeit und der Schläfrigkeit repräsentieren;
c) eines Modulierens (1010), durch die Fahr-Unterstützungsvorrichtung (8), des erzeugten Informationsnachrichten-Flusses als Funktion des berechneten Wachsamkeitsindex (I_{V});
d) eines Darstellens (1012), auf dem Bedienpult (4) für den Fahrer (6) des während Schritt c) modulierten Nachrichten-Flusses.

## Claims

1. Method for assisting in the driving of a railway vehicle (2) including a control panel (4) for a driver (6) of the railway vehicle (2), this method including the steps:
a) generating (1000), by a driving assistance device (8), a supervision system (12) of the railway vehicle (2), a flow of information messages intended to be displayed to the driver (6) of the vehicle (2);
b) assessing the driver's state of vigilance (6), this assessment including:
• measuring (1002), by a monitoring device (10) of the supervision system (12), observable characteristics (C_{A}, Co) of the driver (6);
• measuring (1006) the behavioural characteristics (C_{F}) of the driver that are representative of the operating context of the rail vehicle (2), using a measuring interface from a second analysis set (54) of behavioural characteristics (C_{F}) of the driver (6) relating to the functional context (30) of the monitoring device (10), which measures the interactions of the driver (6) with the control panel (4) to detect, by a module for processing the measured data from the analysis set of behavioural characteristics (54), anomalies in the execution of expected action sequences by the driver (6), the activity of the driver (6) being recorded in the form of activity frames that detail the interactions of the driver (6) with the controls of the control panel (4) over time, the module for processing measured data from the second measurement set (54) determining the behavioural characteristics (C_{F}) of the driver by comparing the sequence of recorded frames with reference sequences, the recorded interactions including: the position of the traction controller of the railway vehicle (2) and/or the activation of an audible warning device of the railway vehicle (2) and/or the active vigilance of the railway vehicle (2), and/or the command to open or close the access doors of the railway vehicle (2);
• constructing (1008), by the monitoring device (10), an indicator representative of a level of drowsiness (I_{S}) and an indicator representative of a level of attention (I_{A}) of the driver (6), based on the measured observable characteristics and as a function of the measured behavioural characteristics (C_{F} ) representative of the operating context;
• calculating (1008), by the monitoring device (10), a vigilance index (I_{V}) representative of the state of vigilance of the driver (6), based on the indicators (I_{A}, I_{S}) constructed as representative of the levels of attention and drowsiness;
c) modulating (1010), by the driving assistance device (8), the flow of generated information messages, as a function of the calculated vigilance index (I_{V});
d) displaying (1012), on the control panel (4) and for the driver (6), the message flow modulated during step c).

2. Method according to claim 1, **characterised in that** during step c), the modulation (1010) includes the modification, by the driving assistance device (8), of priority levels and/or display characteristics of the messages belonging to the message flow, as a function of the calculated vigilance index (I_{V}) and in accordance with a set of predefined rules.

3. Method according to any one of the preceding claims, **characterised in that** the method further includes the measurement (1004) of characteristics (C_{E}) representative of the environment of the railway vehicle (2), by a first analysis set (56) of the monitoring device (10), and **in that**, during step b), the indicators representing the levels of drowsiness (I_{S}) and attention (I_{A}) of the driver (6) are constructed as a function of characteristics (C_{E}) representing the measured environment of the railway vehicle.

4. Method according to any one of the preceding claims, **characterised in that**, during step b), the measured observable characteristics include oculometric characteristics (Co) relating to the driver's (6) eyes, measured by means of a third set of measurements (52) of the monitoring device (10) equipped with an oculometer.

5. Method according to any one of the preceding claims, **characterised in that**, during step b), the measured observable characteristics include facial characteristics (C_{A}) of the driver (6) measured by means of a fourth set of measurements (50) of the monitoring device (10) equipped with an image sensor.

6. Method according to any one of the preceding claims, **characterised in that** during step b), the calculation of the vigilance index (I_{V}) includes combining indicators representative of the levels of drowsiness (I_{S}) and attention (I_{A}) through data fusion.

7. Method according to any one of the preceding claims, and advantageously according to claim 3, **characterised in that** step b) includes, prior to the construction of indicators representing the levels of drowsiness (I_{S}) and attention (I_{A}), a normalisation of the measured observable characteristics (C_{A}, Co), preferably as a function of the characteristics representing the operating context of the railway vehicle and the environment of the railway vehicle (C_{F}, C_{E}).

8. Method according to any one of the preceding claims, **characterised in that** the method further includes a step of issuing a safety alert to the driver (6) by means of an alert generation module (44) when the calculated vigilance index (I_{V}) indicates a lack of vigilance on the part of the driver (6).

9. Railway vehicle (2) including a control panel (4) for a driver (6) of the railway vehicle (2), further including a supervision system (12) comprising a device (8) for assisting in the driving of the railway vehicle (2) and a device (10) for monitoring the state of vigilance of the driver (6), this supervision system (12) being programmed to implement the steps:
a) generating (1000), by the driving assistance device (8), a flow of information messages intended to be displayed to a driver (6) of the vehicle (2);
b) assessing the driver's state of vigilance (6), this assessment including:
• measuring (1002), by the monitoring device (10), observable characteristics (C_{A}, Co) of the driver (6);
• measuring (1006) the behavioural characteristics (CF) of the driver that are representative of the operating context of the rail vehicle (2), using a measuring interface from a second analysis set (54) of behavioural characteristics (CF) of the driver (6) relating to the functional context (30) of the monitoring device (10), which measures the interactions of the driver (6) with the control panel (4) to detect, by a module for processing the measured data from the analysis set of behavioural characteristics (54), anomalies in the execution of expected action sequences by the driver (6), the activity of the driver (6) being recorded in the form of activity frames that detail the interactions of the driver (6) with the controls of the control panel (4) over time, the module for processing measured data from the second measurement set (54) determining the behavioural characteristics (CF) of the driver by comparing the sequence of recorded frames with reference sequences, the recorded interactions including: the position of a traction controller of the railway vehicle (2) and/or the activation of an audible warning device of the railway vehicle (2) and/or the active vigilance of the railway vehicle (2), and/or the command to open or close the access doors of the railway vehicle (2);
• constructing (1008), by the monitoring device (10), of an indicator representing a level of drowsiness (I_{S}) and an indicator representing a level of attention (I_{A}) of the driver (6), based on the measured observable characteristics and as a function of the behavioural characteristics (C_{F}) representative of the measured operating context;
• calculating (1008), using the monitoring device (10), a vigilance index (I_{V}) that reflects the state of vigilance of the driver (6), based on the indicators (I_{A}, I_{S}) that represent levels of attention and drowsiness;
c) modulating (1010), by the driving assistance device (8), the flow of generated information messages, as a function of the calculated vigilance index (I_{V});
d) displaying (1012), on the control panel (4) and for the driver (6), the message flow modulated during step c).
